# EUROPÄISCHE PATENTSCHRIFT

(11) **EP 0 516 934 B1**
(45) Veröffentlichungstag und Bekanntmachung des Hinweises auf die Patenterteilung: **28.08.1996**
(21) Anmeldenummer: 92105587.7
(22) Anmeldetag: 01.04.1992
(51) Int. Cl.: A01D 43/08

(54) **Häckseleinrichtung**
Chopping device
Dispositif de hachage

(30) Priorität: 06.06.1991 DE 9106915 U
(43) Veröffentlichungstag der Anmeldung: 09.12.1992
(73) Patentinhaber: Maschinenfabrik Kemper GmbH, D-48694 Stadtlohn (DE)
(72) Erfinder: Bertling, Alfred, Dipl.-Ing., W-4424 Stadtlohn (DE)
(74) Vertreter: Busse & Busse Patentanwälte

(56) Entgegenhaltungen:
- DE-A- 3 710 213
- DE-U- 8 127 320
- FR-A- 2 541 852
- FR-A- 2 545 680
- FR-A- 2 545 682

## Beschreibung

Die Erfindung bezieht sich auf eine Häckseleinrichtung, insbesondere für den Anbau an die Dreipunkthydraulik eines Schleppers oder dgl., gemäß dem Oberbegriff des Anspruchs 1.

Gemäß FR-A-25 45 680 ist eine Häckseleinrichtung offenbart, die ein mit einer im wesentlichen fahrtrichtungsparallelen Gelenkwelle sowie einem zwischengeordneten Getriebe angetriebenes und in unterschiedliche Arbeitsstellungen in Heck- oder Frontanbau überführbares Häckselaggregat aufweist, wobei das die Gelenkwelle des Schleppers mit dem Häckselaggregat verbindende Getriebe im abtriebsseitigen Verbindungsbereich zu einer getriebenen Welle des Häckselaggregats ein Schwenkgelenk ausbildet und mittels dessen um eine zwei mit 180° winkelbeabstandete Arbeitsstellungen ermöglichende Hochachse schwenkbeweglich ist.

Der Erfindung liegt die Aufgabe zugrunde, eine Häckseleinrichtung zu schaffen, deren im Bereich eines eine Hochachse aufweisenden Schwenkgelenks vorgesehene Antriebsteile mit geringem konstruktiven Aufwand unterschiedliche Arbeitsstellungen ermöglichen.

Die Erfindung löst diese Aufgabe durch eine Häckseleinrichtung mit den Merkmalen des Anspruchs 1. Hinsichtlich wesentlicher weiterer Ausgestaltungsmerkmale wird auf die Ansprüche 2 bis 13 verwiesen.

Die Erfindung schafft eine Häckseleinrichtung, deren Häckselaggregat derart über ein Schwenkgelenk im abtriebsseitigen Verbindungsbereich zur Antriebswelle des Häckselaggregates mit der Zapfwelle des Schleppers gekoppelt ist, daß eine Schwenkung um 180° ausführbar ist und damit unterschiedliche Arbeitsstellungen in einer Anbaulage möglich sind. Die Antriebswelle des Häckselaggregates ist jeweils mit einer der Teilwellen der geteilten Zwischenwelle über eine Klauenkupplung verbindbar. Damit sind in Heck- oder Frontanbau dieser Häckseleinrichtung an den Schlepper jeweils mindestens zwei Arbeitsstellungen mit geringem Aufwand durch eine Schwenkbewegung erreichbar und schnelle Veränderungen der Arbeitsrichtung möglich.

Hinsichtlich weiterer Vorteile und Einzelheiten wird auf die nachfolgende Beschreibung und die Zeichnung verwiesen, in der ein Ausführungsbeispiel des Gegenstandes der Erfindung schematisch näher veranschaulicht ist. In der Zeichnung zeigen:
- Fig. 1: eine perspektivische Prinzipdarstellung einer erfindungsgemäßen Häckseleinrichtung in Heckanbau und getragener Arbeitsstellung an einem Schlepper,
- Fig. 2: einen perspektivischen Teilschnitt eines Schwenkgelenkes im Verbindungsbereich von Häckselaggregat und Getriebe etwa nach Linie II-II in Fig. 4
- Fig. 3: eine teilweise Explosivdarstellung der Häckseleinrichtung gemäß Fig. 1,
- Fig. 4: eine Darstellung gemäß Fig. 1 mit verschwenkter Häckseleinrichtung und Arbeitsstellung in Rückwärtsfahrrichtung des Schleppers, und
- Fig. 5: eine teilweise Explosivdarstellung der Häckseleinrichtung in Arbeitsstellung gemäß Fig. 3 mit Anbau an den Frontbereich des Schleppers.

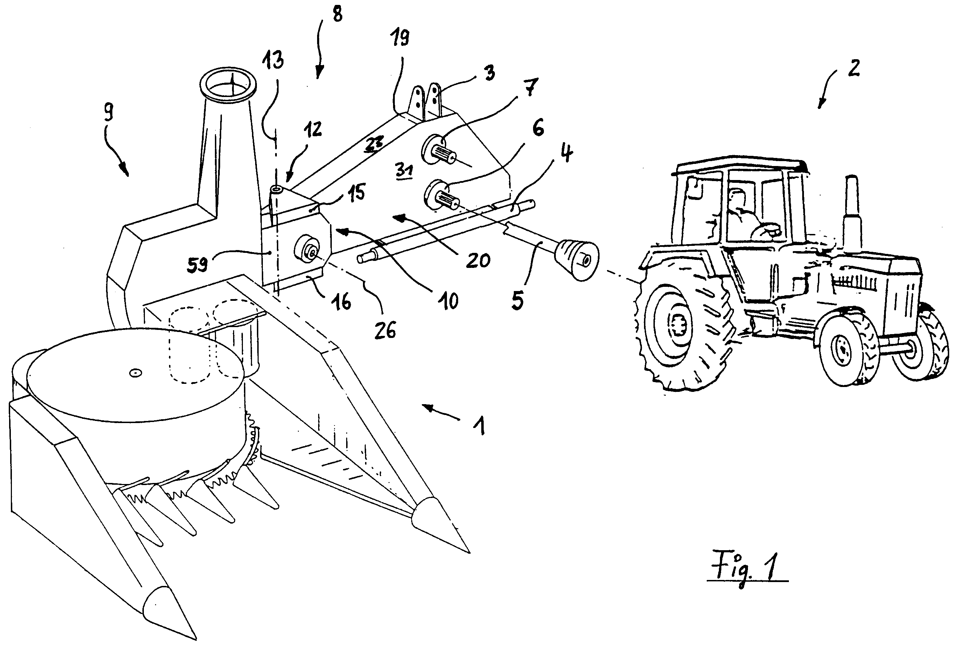

In Fig. 1 ist eine insgesamt mit 1 bezeichnete Häckseleinrichtung (in Verbindung mit einer Maiserntevorrichtung) in einer von einem Schlepper 2 bei Heckanbau seitlich versetzt getragenen Arbeitsstellung dargestellt. Die Häckseleinrichtung 1 weist für den Anbau an die Dreipunkthydraulik (nicht dargestellt) des Schleppers 2 ein oberes Verbindungsteil 3 und einen unteren Verbindungsbalken 4 auf. Zur antriebsmäßigen Verbindung mit dem Schlepper 2 ist eine Getriebewelle 5 wahlweise mit einer unteren Antriebszapfenwelle 6 bzw. einer oberen Antriebszapfenwelle 7 verbindbar, so daß über ein Getriebe 8 das eigentliche, mit 9 bezeichnete Häckselaggregat antreibbar ist.

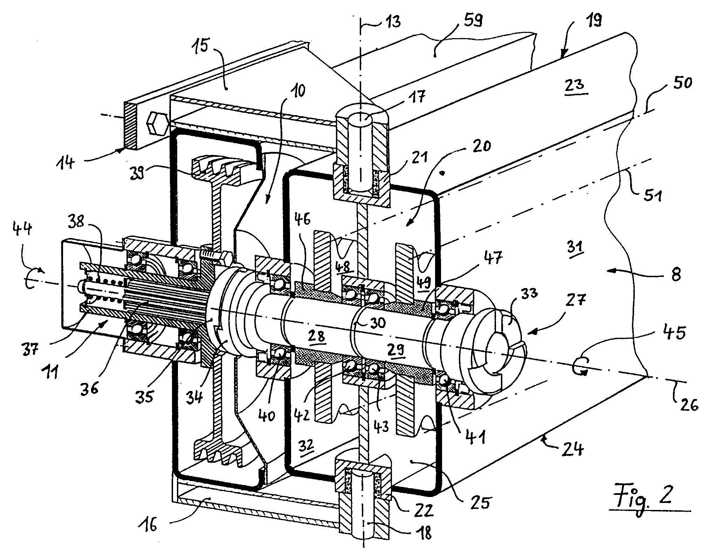

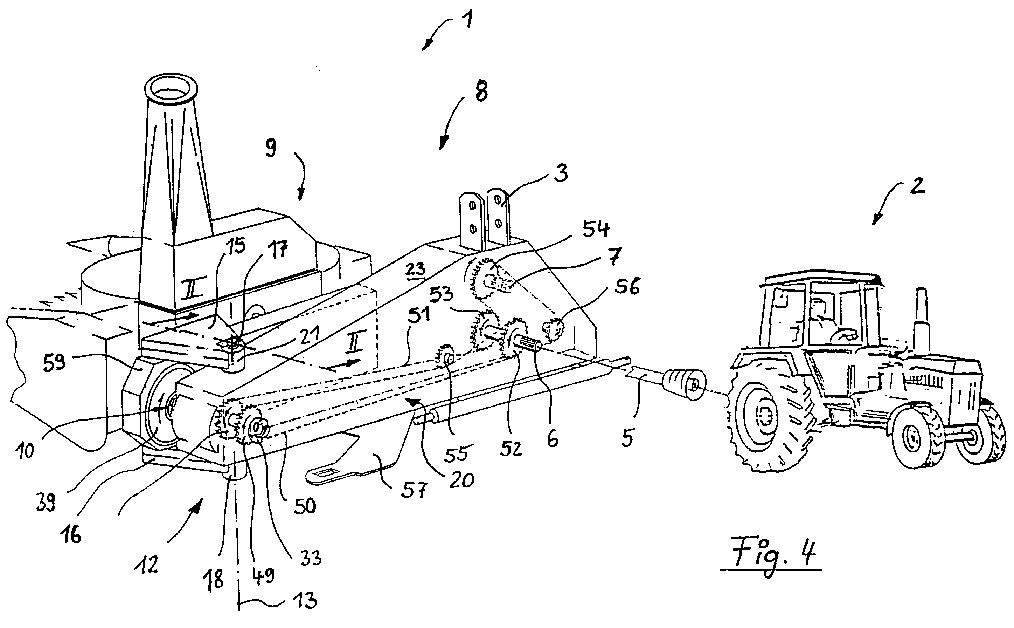

Das Getriebe 8 weist in seinem abtriebsseitigen Verbindungsbereich 10 zu einer getriebenen Welle 11 (Fig. 2) des Häckselaggregats 9 ein Schwenkgelenk 12 auf, das dieses um eine Hochachse 13 schwenkbeweglich in zwei um 180 ° winkelbeabstandeten Arbeitsstellungen (z.B. Fig. 1 und Fig. 4) abstützt.

Das in Fig. 2 in teilweise geschnittener Darstellung näher veranschaulichte Schwenkgelenk 12 im Verbindungsbereich 10 des Getriebes 8 ist in zweckmäßiger Ausführungsform von einem am Häckselaggregat 9 abgestützten Haltegestell 14 mit einer oberen Halteplatte 15 und einer unteren Halteplatte 16 gebildet. Im vorderen Bereich dieser Halteplatten 15, 16 sind jeweils Führungszapfen 17, 18 angeordnet, zwischen denen ein in einem gehäuseförmigen Grundkörper 19 befindlicher vorderer, abtriebsseitiger Getriebeteil 20 des Getriebes 8 (Fig. 1) abgestützt ist. Die Führungszapfen 17, 18 greifen dabei in Führungsbuchsen 21, 22 ein, die eine Oberseite 23 bzw. eine Unterseite 24 des Grundkörpers 19 überragen und mit einer im Grundkörper 19 befindlichen mittleren Stegplatte 25 verbunden sind.

Der im Grundkörper 19 befindliche Getriebeteil 20 weist eine sich über den gesamten Verbindungsbereich 10 erstreckende und zur Hochachse 13 senkrecht angeordnete Drehachse 26 auf. Diese Drehachse 26 ist von einer zur getriebenen Welle 11 des Häckselaggregats 9 fluchtend angeordneten geteilten Zwischenwelle 27 gebildet.

Die geteilte Zwischenwelle 27 weist zwei Teilwellen 28, 29 auf, die einerseits gemeinsam im Trennbereich 30 an der Stegplatte 25 abgestützt sind und andererseits jeweils über Außenwände 31, 32 des Grundkörpers 19 vorstehende Kupplungsteile 33, 34 darbieten.

In der dargestellten Ausführungsform gemäß Fig. 2 sind die Kupplungsteile 33, 34 der Teilwellen 28, 29 als formschlüssig verbindbare Teile einer Klauenkupplung ausgebildet, die jeweils mit einer Gegenklaue 35 der getriebenen Welle 11 des Häckselaggregats 9 formschlüssig in Eingriff gebracht werden können. Um eine verschleißarme und einfache Schaltung der Kupplungsteile 33, 34, 35 zu ermöglichen, ist die getriebene Welle 11 als ein axial federnd abgestützte Vielkeilwelle 36 in einer Hohlwelle 37 mit einer endseitig innenliegenden Federung 38 ausgebildet. An die Hohlwelle 37 ist im Bereich der Gegenklaue 35 eine den Antrieb des Häckselaggregats 9 realisierende Riemenscheibe 39 angeflanscht.

Die Teilwellen 28, 29 sind im Durchtrittsbereich durch die Außenwände 31 bzw. 32 jeweils mit einem Stützlager 40, 41 und im Bereich der gemeinsamen Stegplatte 25 in weiteren zwei Stützlagern 42, 43 derart gelagert, daß die Teilwellen 28, 29 in voneinander unabhängigen, entgegengesetzten Drehrichtungen 44, 45 bewegbar sind.

Für den Antrieb der Teilwellen 28, 29 sind jeweils zwischen den Stützlagern 40, 42 bzw. 41, 43 auf Verbindungshülsen 46, 47 aufgenommene Kettenräder 48, 49 zweier vom gehäuseförmigen Grundkörper 19 umgebener Kettentriebe 50, 51 gehalten.

Diesen Kettentrieben 50, 51 sind parallel beabstandet zur geteilten Zwischenwelle 27 endseitig im Grundkörper 19 die beiden wahlweise mit der Zapfwelle 5 des Schleppers 2 verbindbaren Antriebszapfenwellen 6, 7 zugeordnet, auf denen entsprechende Kettenräder 52, 53, 54 angeordnet sind (Fig. 4).

Eine Variation der Drehrichtungen 44, 45 im Bereich der Teilwellen 28, 29 ist vorzugsweise dadurch erreichbar, daß auf der unteren Antriebszapfenwelle 6 sowohl ein direkt mit der geteilten Zwischenwelle 29 verbundenes Kettenrad 52 als auch ein Kettenrad 53 angeordnet ist, das über ein ein Umlenkkettenrad 54 bildendes Kettenrad auf der oberen Antriebszapfenwelle 7 mit der Zwischenwelle 28 verbunden ist. Die beiden Kettentriebe 50, 51 können dabei jeweils mit zumindest einem Spannrad 55, 56 versehen sein.

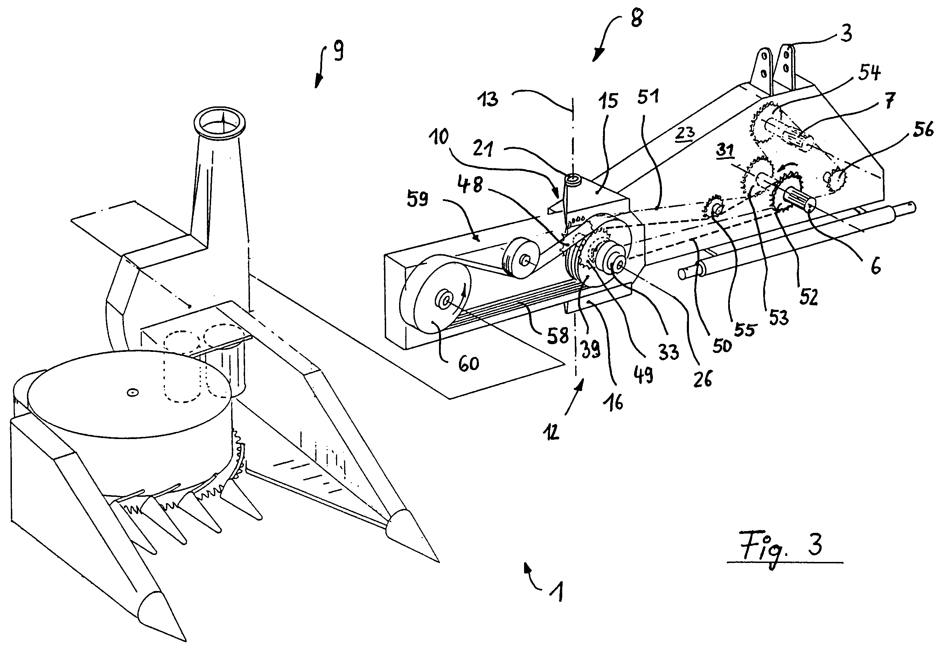

In Fig. 3 veranschaulicht eine teilweise Explosivdarstellung der Häckseleinrichtung 1 mit perspektivisch versetztem Häckselaggregat 9 die Arbeitsstellung des Getriebes 8 bei Heckanbau am Schlepper 2 in der seitlich versetzt getragenen Anbaulage gemäß Fig. 1; eine dazu um 180° winkelbeabstandete Arbeitsstellung für Rückwärtsfahrt zu unverändertem Heckanbau ist in Fig. 4 dargestellt.

Diese beiden Arbeitsstellungen des Häckselaggregats 9 sind mit geringem Aufwand jeweils dadurch erreichbar, daß das Häckselaggregat 9 ohne zusätzliche Hilfsmittel im Schwenkgelenk 12 um die Hochachse 13 in die eine oder andere Position gemäß Fig. 3 oder 4 geschwenkt wird, gegebenenfalls unter Betätigung einer an der Unterseite 24 des Grundkörpers 19 befindlichen Riegelvorrichtung 57.

In der Arbeitsstellung gemäß Fig. 3 ist die Gegenklaue 35 mit dem Kupplungsteil 33 der Zwischenwelle 27 verbunden und wird über den Kettentrieb 50 in der Drehrichtung 45 von der unteren Antriebszapfenwelle 6 her angetrieben. Die Teilwelle 28 (Fig. 2) wird dabei im Leerlauf über den Kettentrieb 51 mitgedreht, so daß ein sicherheitstechnischer Schutz des frei vor der Außenwand 32 des Grundkörpers 19 drehenden Kupplungsteils 34 zweckmäßig ist. Der Antrieb des Häckselaggregats 9 erfolgt über die Riemenscheibe 39 mittels eines Keilriemens 58, der in einem Gehäuse 59 unmittelbar mit einer Gegenscheibe 60 verbunden ist.

In der Arbeitsstellung gemäß Fig. 4 treibt der rückwärtsfahrende Schlepper 2 über die Gelenkwelle 5 und die untere Antriebszapfenwelle 6 wiederum beide Kettentriebe 50, 51 an, wobei in diesem Falle der Kettentrieb 50 leer mitläuft. Über den Kettentrieb 51, der über das als Umlenkrad wirksame Kettenrad 54 die Teilwelle 28 antreibt, wird das Häckselaggregat 9 über die Verbindung des Kupplungsteils 34 mit der Gegenklaue 35 (Fig. 2) angetrieben.

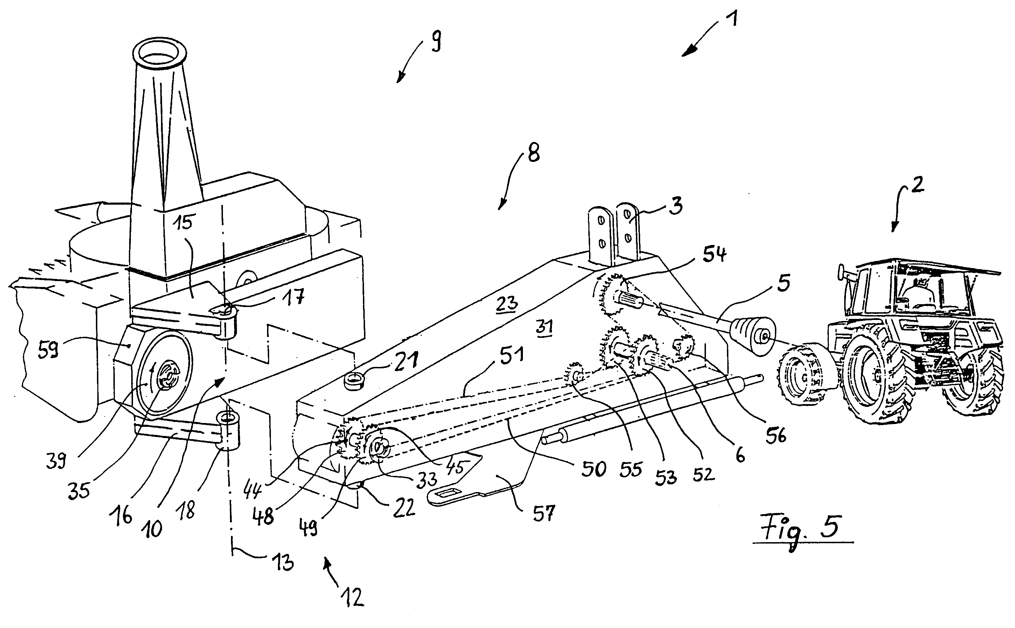

In Fig. 5 ist eine der beiden möglichen Arbeitsstellungen der Häckseleinrichtung 1 bei Frontanbau am Schlepper 2 dargestellt. In dieser Anbaulage treibt die Gelenkwelle 5 über die obere Antriebszapfenwelle 7 den Kettentrieb 51 in der erforderlichen Drehrichtung 44 an, und die Häckseleinrichtung kann in einer vorwärts einstechenden Arbeitsvariante zum Einsatz gebracht werden.

In einer nicht näher veranschaulichten, gegenüber der Darstellung in Fig. 5 um 180° beabstandeten Arbeitsstellung kann die Häckseleinrichtung bei Frontanbau vom Schlepper 2 auch in Rückwärtsfahrt getragen werden, wobei dann (analog zur Arbeitsstellung gemäß Fig. 1 bzw. Fig. 3) der Antrieb des Häckselaggregats 9 direkt über den Kettentrieb 50, 51 und die zugehörige Zwischenwelle 29 erfolgt.

Der Gegenstand der Erfindung ist nicht auf die in den Zeichnungen dargestellten und vorstehend beschriebenen Ausführungsbeispiele beschränkt. Vielmehr sind im Rahmen der Ansprüche auch anderweitige Ausgestaltungen und Modifikationen denkbar. So kann zum Beispiel der Kettentrieb 50, 51 durch einen anderen Antrieb ersetzt werden oder die Riemenscheibe 39 das Häckselaggregat 9 direkt antreiben, wenn bereits im Getriebeteil 20 eine entsprechende Unter- oder oder Übersetzung vorgesehen ist.

## Patentansprüche

1. Häckseleinrichtung, insbesondere für den Anbau an die Dreipunkthydraulik eines Schleppers (2) oder dgl., die ein mit einer im wesentlichen fahrtrichtungsparallelen Gelenkwelle (5) sowie einem zwischengeordneten Getriebe (8) angetriebenes und in unterschiedliche Arbeitsstellungen in Heck- oder Frontanbau überführbares Häckselaggregat (9) aufweist, wobei das Getriebe (8) im abtriebsseitigen Verbindungsbereich (10) zu einer getriebenen Welle (11) des Häckselaggregates (9) ein Schwenkgelenk (12) ausbildet, mittels dessen das Häckselaggregat (9) um eine zwei mit 180° winkelbeabstandete Arbeitsstellungen ermöglichende Hochachse (13) schwenkbeweglich ist, **dadurch gekennzeichnet**, daß das Getriebe (8) eine in der Hochachse (13) geteilte Zwischenwelle (27) aufweist, die sich im Bereich des Schwenkgelenkes (12) befindet und die über Kupplungsteile (33, 34, 35) mit der getriebenen Welle (11) verbindbar ist.

2. Häckseleinrichtung nach Anspruch 1, dadurch gekennzeichnet, daß das Schwenkgelenk (12) im Verbindungsbereich (10) des Getriebes (8) von einem mit einer oberen Halteplatte (15) und einer unteren Halteplatte (16) am Häckselaggregat (9) abgestützten Haltegestell (14) mit zwei die Hochachse (13) definierenden Führungszapfen (17, 18) gebildet ist.

3. Häckseleinrichtung nach Anspruch 1 oder 2, dadurch gekennzeichnet, daß ein vom Haltegestell (14) umfaßtes Getriebeteil (20) in einem gehäuseförmigen Grundkörper (19) angeordnet ist, an dem die Führungszapfen (17, 18) in Führungsbuchsen (21, 22) drehbeweglich im Bereich einer Oberseite (23) und einer Unterseite (24) abgestützt sind.

4. Häckseleinrichtung nach einem der Ansprüche 1 bis 3, dadurch gekennzeichnet, daß die geteilte Zwischenwelle (27) eine zur getriebenen Welle (11) des Häckselaggregates (9) fluchtende Drehachse (26) darbietet.

5. Häckseleinrichtung nach einem der Ansprüche 1 bis 4, dadurch gekennzeichnet, daß die Kupplungsteile (33, 34, 35) eine ausrückbare Klauenkupplung bilden.

6. Häckseleinrichtung nach einem der Ansprüche 1 bis 5, dadurch gekennzeichnet, daß die getriebene Welle (11) als axial federnd abgestützte Vielkeilwelle (36) mit stirnseitigem Kupplungsteil (35) in einer gelagerten Hohlwelle (37) sowie mit angeflanschter Riemenscheibe (39) ausgebildet ist.

7. Häckseleinrichtung nach einem der Ansprüche 1 bis 6, dadurch gekennzeichnet, daß die geteilte Zwischenwelle (27) von zwei beidseits einer gemeinsamen Stegplatte (25) des Grundkörpers (19) angeordneten, jeweils endseitig über eine Außenwand (31, 32) vorstehende Kupplungsteile (33, 34) darbietenden Teilwellen (28, 29) gebildet ist.

8. Häckseleinrichtung nach Anspruch 7, dadurch gekennzeichnet, daß die Teilwellen (28, 29) im Bereich der gemeinsamen Stegplatte (25) sowie im Bereich der jeweiligen Außenwand (31, 32) des Grundkörpers (19) zumindest je ein Stützlager (40, 41, 42, 43) aufweisen.

9. Häckseleinrichtung nach einem oder mehreren der Ansprüche 1 bis 8, dadurch gekennzeichnet, daß jeder der Teilwellen (28, 29) zwischen den jeweiligen Stützlagern (40, 41) zumindest je ein entgegengesetzt drehbares Kettenrad (48, 49) zweier vom gehäuseformigen Grundkörper (19) umgebener Kettentriebe (50, 51) zugeordnet ist.

10. Häckseleinrichtung nach einem der Ansprüche 1 bis 9, dadurch gekennzeichnet, daß parallel beabstandet zur geteilten Zwischenwelle (27) endseitig im Grundkörper (19) zwei wahlweise mit der Gelenkwelle (5) des Schleppers (2) verbindbare Antriebszapfenwellen (6, 7) mit von den beiden Kettentrieben (50, 51) umgriffenen Kettenrädern (52, 53, 54) angeordnet sind.

11. Häckseleinrichtung nach Anspruch 9 und 10, dadurch gekennzeichnet, daß auf der unteren Antriebszapfenwelle (6) ein direkt und ein über ein Umlenkkettenrad (54) auf der oberen Antriegszapfenwelle (7) indirekt mit der geteilten Zwischenwelle (27) verbundenes Kettenrad (52, 53) fest angeordnet sind.

12. Häckseleinrichtung nach einem der Ansprüche 9 bis 11, dadurch gekennzeichnet, daß die beiden Kettentriebe (50, 51) mit jeweils einem Spannrad (55, 56) versehen sind.

13. Häckseleinrichtung nach einem der Ansprüche 1 bis 12, dadurch gekennzeichnet, daß zur Festlegung des Häckselaggregates (9) in der jeweiligen Arbeitsstellung an der Unterseite (24) des Grundkörpers (19) eine Riegelvorrichtung (57) angeordnet ist.

## Claims

1. A chaff cutter, particularly for attachment to the hydraulic three-point hitch of a tractor (2) or the like and comprising a driven chopping assembly (9) with a cardan shaft (5) substantially parallel with the direction of travel and with an interposed gear mechanism (8) and adapted to be moved into various rear or frontal working positions, whereby the gear mechanism (8) has on the output side a portion (10) for connection to a driven shaft (11) of the chopping assembly (9) developing into a pivot joint (12) by means of which the chopping assembly (9) can be pivoted about a vertical axis (13) which permits of two working positions which are spaced apart by an angle of 180°, characterised in that the gear mechanism (8) comprises an intermediate shaft (27) divided in the vertical axis (13) and which is disposed in the region of the pivot joint (12) and which can be connected to the driven shaft (11) by coupling parts (33, 34, 35).

2. A chaff cutter according to claim 1, characterised in that the pivot joint (12) in the connecting portion (10) of the gear mechanism (8) is constituted by a supporting frame (14) braced on the cutting assembly (9) by an upper retaining plate (15) and a lower retaining plate (16) and having two guide journals (17, 18) which define the vertical axis (13).

3. A chaff cutter according to claim 1 or 2, characterised in that a gear part (20) enclosed by the supporting frame (14) is disposed in a housing-like base member (19) on which the guide journals (17, 18) are braced in the region of an upper side (23) and a lower side (24) for rotary movement in guide bushes (21, 22).

4. A chaff cutter according to one of claims 1 to 3, characterised in that the divided intermediate shaft (27) provides an axis of rotation (26) which is aligned with the output shaft (11) from the cutting assembly (9).

5. A chaff cutter according to one of claims 1 to 4, characterised in that the coupling parts (33, 34, 35) constitute a disengageable dog coupling.

6. A chaff cutter according to one of claims 1 to 5, characterised in that the driven shaft (11) is constructed as an axially resiliently supported multi-spline shaft (36) with, at the end, a coupling part (35) in a mounted hollow shaft (37) and with a flanged-on belt pulley (39).

7. A chaff cutter according to one of claims 1 to 6, characterised in that the divided intermediate shaft (27) is formed by, disposed on both sides of a common web plate (25) of the basic member (19) and projecting at the ends beyond an outer wall (31, 32), two partial shafts (28, 29) which form coupling parts (33, 34).

8. A chaff cutter according to claim 7, characterised in that in the region of the common web plate (25) and in the region of the respective outer walls (31, 32) of the base member (19) the partial shaft (28, 29) comprises at least one support bearing (40, 41, 42, 43) in each case.

9. A chaff cutter according to one or more of claims 1 to 8, characterised in that there is associated with each of the partial shafts (28, 29) and between the respective support bearings (40, 41) at least one oppositely rotatable sprocket (48, 49) of two chain transmissions (50, 51) enclosed by the housing-like basic member (19).

10. A chaff cutter according to one of claims 1 to 9, characterised in that spaced apart and parallel with the divided intermediate shaft (27) there are at the end, in the basic member (19) and adapted optionally to be connected to the cardan shaft (5) of the tractor (2), two power take-off shafts (6, 7) with sprockets (52, 53) over which run the two chain transmissions (50, 51).

11. A chaff cutter according to claims 9 and 10, characterised in that on the lower power take-off shaft (6) there is a sprocket (52) directly connected to the divided intermediate shaft (27) while sprocket (53) on the upper power take-off shaft (7) is indirectly connected to the divided intermediate shaft (27).

12. A chaff cutter according to one of claims 9 to 11, characterised in that the two chain transmissions (50, 51) are each provided with a tensioning wheel (55, 56).

13. A chaff cutter according to one of claims 1 to 12, characterised in that for fixing the cutting assembly (9) in the appropriate working position a locking device (57) is disposed on the underside (24) of the basic member (19).

## Revendications

1. Dispositif de hachage, en particulier destiné à l'attelage trois points à relevage hydraulique d'un tracteur (2) ou d'une machine agricole analogue, qui comporte une unité de hachage (9) qui est entraînée par un arbre articulé (5) essentiellement parallèle au sens de la marche ainsi que par une transmission intermédiaire (8) et qui, portée à l'arrière ou à l'avant, peut être transférée dans diverses positions de travail, la transmission (8) formant, dans la zone de liaison (10) côté sortie à un arbre entraîné (11) de l'unité de hachage (9), une articulation de pivotement (12) grâce à laquelle l'unité de hachage (9) peut pivoter autour d'un axe vertical (13) permettant deux positions de travail séparées l'une de l'autre par un angle de 180°, caractérisé en ce que la transmission (8) comporte un arbre intermédiaire (27) divisé en deux parties au niveau de l'axe vertical (13), qui se trouve dans la zone de l'articulation de pivotement (12) et qui peut être relié à l'arbre entraîné par l'intermédiaire d'organes d'accouplement (33, 34, 35).

2. Dispositif de hachage suivant la revendication 1, caractérisé en ce que l'articulation de pivotement (12) est formée dans la zone de liaison (10) de la transmission (8) d'un dispositif de support (14) monté sur l'unité de hachage (9) et comportant une plaque de support supérieure (15) et une plaque de support inférieure (16) ainsi que deux tourillons de guidage (17, 18) définissant l'axe vertical (13).

3. Dispositif de hachage suivant la revendication 1 ou 2, caractérisé en ce qu'une partie (20) de la transmission enserrée par le dispositif de support (14) est disposée dans un corps de base (19) en forme de carter, dans lequel les tourillons de guidage (17, 18) tourillonnent dans des douilles de guidage (21, 22) dans la zone d'une face supérieure (23) et d'une face inférieure (24).

4. Dispositif de hachage suivant l'une quelconque des revendications 1 à 3, caractérisé en ce que l'arbre intermédiaire en deux parties (27) présente un axe de rotation (26) en ligne avec l'arbre entraîné (11) de l'unité de hachage (9).

5. Dispositif de hachage suivant l'une quelconque des revendications 1 à 4, caractérisé en ce que les organes d'accouplement (33, 34, 35) forment un accouplement à griffes séparable.

6. Dispositif de hachage suivant l'une quelconque des revendications 1 à 5, caractérisé en ce que l'arbre entraîné (11) se présente sous la forme d'un arbre cannelé (36) prenant appui axialement sur un ressort, pourvu d'un organe d'accouplement d'about (35), logé dans un arbre creux (37) monté sur paliers, et portant une poulie (39) boulonnée par bride.

7. Dispositif de hachage suivant l'une quelconque des revendications 1 à 6, caractérisé en ce que l'arbre intermédiaire en deux parties (27) est formé de deux demi-arbres (28, 29) disposés de part et d'autre d'une plaque d'âme commune du corps de base (19) et présentant des organes d'accouplement (33, 34) faisant saillie sur une paroi externe (31, 32).

8. Dispositif de hachage suivant la revendication 7, caractérisé en ce que les demi-arbres (28, 29) présentent dans la zone de la plaque d'âme commune (25) ainsi que dans la zone de chaque paroi externe (31, 32) du corps de base (19) au moins chaque fois un palier de support (40, 41, 42, 43).

9. Dispositif de hachage suivant une ou plusieurs des revendications 1 à 8, caractérisé en ce qu'à chacun des demi-arbres (28, 29) est adjointe, entre les paliers de support respectifs (40, 41), au moins une roue à chaîne (48, 49), les roues à chaîne (48, 49) recevant deux chaînes de transmission (50, 51) contenues dans le corps de base (19) en forme de carter et tournant en sens opposés.

10. Dispositif de hachage suivant l'une quelconque des revendications 1 à 9, caractérisé en ce qu'à une certaine distance de l'arbre intermédiaire en deux parties (27) et parallèlement à celui-ci sont disposés, à l'extrémité du corps de base (19), deux bouts d'arbres d'entraînement (6, 7) pouvant être reliés sélectivement à l'arbre articulé (5) du tracteur (2) et pourvus de roues à chaîne (52, 53, 54) en prise avec les deux chaînes (50, 51).

11. Dispositif de hachage suivant l'une ou l'autre des revendications 9 et 10, caractérisé en ce que sur le bout d'arbre d'entraînement inférieur (6) sont fixées une roue à chaîne (52) reliée directement à l'arbre intermédiaire en deux parties (27) et une roue à chaîne (53) reliée indirectement à l'arbre intermédiaire en deux parties (27) par l'intermédiaire d'une roue à chaîne de renvoi (54) montée sur le bout d'arbre d'entraînement supérieur (7).

12. Dispositif de hachage suivant l'une quelconque des revendications 9 à 11, caractérisé en ce que les deux chaînes de transmission (50, 51) sont pourvues chaque fois d'un pignon tendeur (55, 56).

13. Dispositif de hachage suivant l'une quelconque des revendications 1 à 12, caractérisé en ce que pour la fixation de l'unité de hachage (9) dans une position de travail respective, un dispositif de verrouillage (57) est prévu sur la face inférieure (24) du corps de base (19).
